# EUROPÄISCHE PATENTSCHRIFT

(11) **EP 3 061 678 B1**
(45) Veröffentlichungstag und Bekanntmachung des Hinweises auf die Patenterteilung: **10.10.2018**
(21) Anmeldenummer: 16156647.6
(22) Anmeldetag: 22.02.2016
(51) Int. Cl.: B62D 51/02

(54) **FLURFÖRDERZEUG MIT EINEM FAHRERSTANDPLATZ**
INDUSTRIAL TRUCK WITH A DRIVER STAND
CHARIOT DE MANUTENTION DOTÉ D'UNE PLACE DEBOUT POUR LE CONDUCTEUR

(30) Priorität: 24.02.2015 DE 102015102584
(43) Veröffentlichungstag der Anmeldung: 31.08.2016
(73) Patentinhaber: Jungheinrich Aktiengesellschaft, 22047 Hamburg (DE)
(72) Erfinder: LOHMANN, HELMUT, 27404 Gyhum (DE)
(74) Vertreter: Hauck Patentanwaltspartnerschaft mbB

(56) Entgegenhaltungen:
- EP-A1- 0 449 029
- EP-A1- 2 336 010
- EP-A2- 1 172 285
- WO-A2-2006/118925
- DE-A1-102009 058 598

## Beschreibung

Die vorliegende Erfindung betrifft ein Flurförderzeug mit einem Antriebsteil, das einen Fahrerstandplatz aufweist.

Bei Fahrten auf unebenem Boden ist eine weich gefederte Standplattform sehr komfortabel. Ein großer vertikaler Federweg entkoppelt die Standplattform vom Fahrzeug. Für eine zu weiche Federung ergibt sich hierbei ein großer Federweg, der von einem Fahrer als zu lang empfunden werden kann. Darüber hinaus ist zu berücksichtigen, dass der Fahrerstandplatz für Fahrer mit einem Körpergewicht zwischen 50 kg und 150 kg eine gute Federung bieten soll. Sowohl der Fahrer an der unteren Grenze des Gewichtsbereichs soll einen ausreichenden Federkomfort erfahren, wie auch der Fahrer am oberen Ende des Gewichtsbereichs. Je nach Lagerungsart der Standplattform entsteht über den Federweg eine größere Schwenkbewegung der Plattform. Es kann auch zu einem seitlichen Verschwenken und Kippen bei sehr breiten Standflächen kommen. Beim häufigen Betreten und Verlassen der Standplattform wird das seitliche Verschwenken von Fahrzeugführern als unsicher und instabil empfunden.

Aus DE 42 14 788 C2 ist eine Standfläche für einen stehenden Fahrer eines Flurförderzeugs bekannt geworden. Die Standfläche besitzt eine Plattform, die durch mindestens ein elastisch nachgebendes Pufferelement fahrzeugfest abgestützt ist, wobei eine versteifte Blechplatte an einem Ende mit einem flexiblen Abschnitt fest mit dem fahrzeugfesten Teil verbunden ist und das Pufferelement die Blechplatte an dem anderen Ende abstützt.

Aus DE 103 60 298 A1 ist eine gefederte Fahrerplattform bekannt, bei der die Standplattform über ein Federelement gefedert und zusätzlich über ein Dämpfungselement gedämpft ist.

Aus DE 10 2005 045 505 A1 ist ein Bodenblech für eine Standplattform eines Flurförderzeugs bekannt. Das Bodenblech ist schwenkbar gelagert und von einer Feder in einer angehobenen Position vorgespannt, wobei unterhalb des Bodenblechs ein Näherungssensor angeordnet ist. Eine an der Unterseite des Bodenblechs angebrachte Schaltnase ist derart angeordnet, dass sie bei einer Verschwenkung des Bodenblechs nach unten gegen die Kraft der Feder durch Überdeckung mit dem Näherungssensor einen Schaltvorgang auslöst.

Aus DE 10 2006 009 330 A1 ist eine Standplattform für einen Hubwagen bekannt, bei der die Standfläche von einer oberen Bodenplatte gebildet ist, die an einer unteren Bodenplatte gelenkig gelagert und an ihrem gegenüberliegenden Ende durch Feder- und/oder Dämpfungselemente gedämpft wird.

Aus DE 10 2006 009 331 A1 ist eine Standplattform für einen Hubwagen bekannt, die eine gefederte Standfläche für eine Bedienperson aufweist, wobei die Standfläche von einer oberen Bodenplatte gebildet wird, die an einer unteren Bodenplatte gelenkig gelagert ist. Zwischen den Bodenplatten ist ein Federelement angeordnet, das die obere Bodenplatte gegenüber der unteren Bodenplatte nach oben vorspannt. Die obere Bodenplatte ist durch die Gewichtskraft einer Bedienperson entgegen der Kraft des Federelements nach unten bewegbar, wobei ein Positionssensor zum Erkennen der Position der oberen Bodenplatte vorgesehen ist.

Aus US 7,497,505 sowie US 8,414,065 ist jeweils ein Flurförderzeug bekannt, bei dem ein federnd gelagertes Bodenelement über ein Scherengetriebe in der Höhe verstellbar ist. Eine federnde Wirkung entsteht durch vorgespannte Federelemente, die an dem Scherengetriebe oder an der Bodenplatte angreifen und in Position gehalten sind. Als nachteilig an dem bekannten Verfahren hat sich eine seitliche Instabilität der Bodenplattform und das deutlich begrenzte Gewichtsspektrum herausgestellt.

Aus WO 2006/118925 A2 ist ein Flurförderzeug mit einem gefederten Fahrerstandplatz bekannt geworden. Über einen verrastbaren Hebel, der federvorgespannt ist, können Federn für den Fahrerstandplatz unterschiedlich stark vorgespannt werden.

Aus EP 2 336 010 A1 ist ein Flurförderzeug mit einem schwenkbar gelagerten Fahrerstandplatz bekannt geworden, dessen Höhenverstellung durch zwei Federn abgefedert ist.

Der Erfindung liegt die Aufgabe zugrunde, ein Flurförderzeug mit einem gefederten Fahrerstandplatz bereitzustellen, bei dem der Fahrerstandplatz über den zurückgelegten Federweg stabil ist und für ein großes Gewichtsspektrum eine ausreichende Federung bietet.

Erfindungsgemäß wird die Aufgabe durch ein Flurförderzeug mit den Merkmalen aus Anspruch 1. Vorteilhafte Ausgestaltungen bilden die Gegenstände der Unteransprüche.

Das erfindungsgemäße Flurförderzeug besitzt ein Antriebsteil, das einen Fahrerstandplatz aufweist. Der Fahrerstandplatz besitzt eine L-förmige Standplattform mit einem horizontal angeordneten Bodenelement und einem vertikal stehenden Wandelement. Bei dem erfindungsgemäßen Fahrzeug ist das Bodenelement über eine Schwinge beweglich gegenüber einem Rahmen des Antriebsteils gelagert. Das Wandelement besitzt mindestens ein fahrzeugfest angebundenes Koppelelement, das auf die Bewegung des Bodenelements wirkt.

Ferner sind mindestens ein Federelement und ein an dem Wandelement angeordneter Schalthebel vorgesehen. In einer ersten Schaltstellung des Schalthebels wirken Schalthebel und Federelement zusammen. In einer zweiten Schaltstellung des Schalthebels sind Schalthebel und Federelement frei zueinander bewegbar. In der ersten Schaltstellung wirkt eine Federkraft des mit dem Schalthebel zusammenwirkenden Federelements bevorzugt über die Schalthebellagerung auf die vertikale Wand der Standplattform. Durch das Zuschalten bzw. Wegschalten eines Federelements über einen Schalthebel kann auf einfache Art und Weise die Federung an das Körpergewicht einer Bedienperson angepasst werden. Zudem
eröffnet das auf einer Schwinge gelagerte Bodenelement ausreichende Führungssteifigkeit, so dass ein Benutzer den Fahrerstandplatz sicher benutzen kann.

In einer bevorzugten Ausgestaltung ist die Standplattform über die Schwinge (und ein Koppelelement) und, unabhängig von dem zuschaltbaren Federelement, durch eine Federung federnd gelagert. Die Federung bildet die Federkraft für die Standplattform, insbesondere wenn keine Federelemente zugeschaltet sind.

In einer weiteren bevorzugten Ausgestaltung ist das Koppelelement als eine Führungsrolle ausgebildet. Das Koppelelement verbindet die Standplattform und insbesondere deren vertikal stehendes Wandelement mit dem Fahrzeug. Hierbei entsteht eine vertikale oder zumindest eine annähernd vertikale Bewegung der Standplattform. Die Führungsrolle rollt bevorzugt an einer fahrzeugfesten Führung ab und begrenzt die Bewegung der Standplattform auf eine vertikale oder annähernd vertikale Bewegung.

In einer bevorzugten Ausgestaltung sind zwei oder mehr Schalthebel mit ihren jeweiligen Federelementen vorgesehen. In einer bevorzugten Ausgestaltung kann jeder Schalthebel unabhängig von der Stellung der anderen Schalthebel in seine Schaltstellung gebracht werden. Durch die Kombination von mehreren Federelementen ist es möglich, beispielsweise mit mehreren Federelementen eine gewünschte Federkraft einzustellen. Die Federkräfte der Federelemente können dabei gleich oder verschieden sein.

In einer bevorzugten Ausgestaltung weist einer oder mehrere der Schalthebel einen Mitnehmer auf, über den ein oder mehrere benachbarte Schalthebel bei einer Befestigung mitgenommen werden. Hierbei erweist sich die Bedienung der Schalthebel als besonders vereinfacht, da durch Mitnahme von benachbarten Schalthebeln der Bedienungsaufwand und die Einstellung der gewünschten Federkraft deutlich vereinfacht ist.

In einer Weiterbildung liegt der Schalthebel an einem Rastvorsprung an, wobei in der ersten Schaltstellung der Schalthebel mit einem Stellarm an dem zugehörigen Federelement anliegt, so dass bei einer federnden Bewegung der Schwinge das Federelement komprimiert wird. Der Schalthebel besitzt einen Stellarm, der in der ersten Schaltstellung mit dem zugehörigen Federelement des Schalthebels zusammenwirkt. Wird der Schalthebel gemeinsam mit dem Wandelement durch eine Bewegung der Standplattform bewegt, so drückt der Stellarm auf das Federelement und erzeugt eine Federkraft.

In einer bevorzugten Ausgestaltung sind die zuschaltbaren Federelemente als Gasdruckfedern ausgeführt. Sie zeichnen sich durch eine definierte Vorspannkraft, eine flache Kennlinie und eine kompakte Bauweise aus.

In einer bevorzugten Weiterbildung des erfindungsgemäßen Flurförderzeugs weist die Schwinge mindestens einen Arm auf, der mit einem Ende an dem fahrzeugfesten Gestell oder auch direkt an dem Rahmen des Antriebsteils und seinem anderen Ende an dem Bodenelement angelenkt ist. Der mindestens eine Arm der Schwinge ist an seinem von dem Wandelement fortweisenden Ende an dem Bodenelement angelenkt. Durch eine Gewichtskraft auf das Bodenelement wird die Standplattform ausgelenkt. Hierbei wird in der ersten Schaltstellung des Schalthebels das Federelement zusammengedrückt und bewirkt eine federnde Bewegung des Bodenelements.

In einer bevorzugten Ausgestaltung besitzt die Schwinge mindestens zwei über einen Querarm miteinander verbundene Arme. Die Verwendung von zwei Armen an der Schwinge mit dem bevorzugt torsionssteifen Querarm schafft den Vorteil, dass das Bodenelement nicht seitlich verkippen kann.

In einer bevorzugten Weiterbildung des erfindungsgemäßen Flurförderzeugs ist ein fahrzeugfestes Führungselement vorgesehen, das über ein Paar von Seitenschenkeln mit dem Fahrzeug verbunden ist und die Führung für die Führungsrolle bildet. Das fahrzeugfeste Führungselement weist bevorzugt zur Seite des Bodenelements, so dass bei einer Betätigung der Schwinge die Führungsrolle eine an die Führung drückende Kraft erfährt.

In einer bevorzugten Ausgestaltung ist ein Positionssensor vorgesehen, der mit dem Wandelement und/oder dem Koppelelement zusammenwirkt. In einer bevorzugten Ausgestaltung ist das Koppelelement beispielsweise in Form einer Führungsrolle oder deren Lagerachse unterhalb des Positionssensors angeordnet und befindet sich bei einer unbelasteten Position des Federelements in einer von dem Positionssensor erfassbaren Position. In dieser Ausgestaltung kann der Positionssensor anhand der Führungsrolle erfassen, ob eine Gewichtskraft auf das Bodenelement wirkt. Wirkt keine Gewichtskraft, sind die Federelemente unbelastet und die Führungsrolle befindet sich in der von dem Positionssensor erfassbaren Position. Der Positionssensor kann hierbei die Position der Rolle oder einer Lagerung der Führungsrolle erfassen.

In einer bevorzugten Weiterbildung ist der Positionssensor ausgebildet, um ein Totmannsignal zu generieren, wenn er die Position eines unbelasteten Federelements erfasst. Das Totmannsignal stellt sicher, dass eine Fahrzeugsteuerung erkennt, wenn ein Fahrzeugführer seinen Standplatz verlassen hat.

In einer bevorzugten Weiterbildung ist ein zweites Federelement vorgesehen, das an der zum Wandelement weisenden Seite des Bodenelements fahrzeugfest angeordnet ist. Dieses zweite Federelement wirkt mit dem Bodenelement zusammen. Durch das zweite Federelement ist sichergestellt, dass selbst in der Situation, dass keines von den Federelementen über den Schalthebel zugeschaltet ist, eine federnde Wirkung erzielt wird. Im Hinblick auf den Positionssensor ist dieser derart eingerichtet, dass die Position der Führungsrolle erfasst wird, wenn das Bodenelement nicht belastet ist.

Ein bevorzugtes Ausführungsbeispiel der Erfindung wird nachfolgend erläutert. Es zeigen:
- Fig. 1: ein erfindungsgemäßes Flurförderzeug in einer perspektivischen Ansicht von der Seite,
- Fig. 2: eine Schnittansicht durch die Standplattform bei nicht zugeschaltetem Federelement in einer unbelasteten Stellung,
- Fig. 3: die Schnittansicht aus Fig. 2 in einer belasteten Stellung,
- Fig. 4: eine Schnittdarstellung durch die Hubplattform bei zugeschaltetem Federelement und nicht belastetem Fahrerstandplatz,
- Fig. 5: die Schnittdarstellung aus Fig. 4 in belasteter Stellung,
- Fig. 6: eine perspektivische Ansicht auf die Fahrerstandplattform mit teilweise durchbrochenem Boden- und Wandelement im nicht belasteten Zustand,
- Fig. 7: die Ansicht aus Fig. 6 im belasteten Zustand,
- Fig. 8: drei Schalthebel in einer perspektivischen Ansicht von der Seite und
- Fig. 9: die drei Schalthebel aus Fig. 8 in einer perspektivischen Ansicht von vorne.

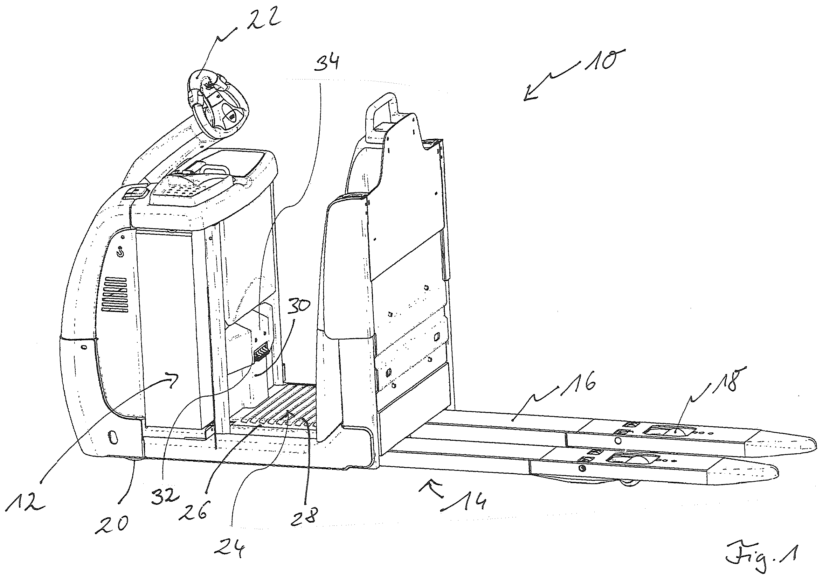

Fig. 1 zeigt ein Flurförderzeug 10 mit einem Antriebsteil 12 und einem Lastteil 14. Das Lastteil 14 weist ein Paar von Gabelzinken 16 auf, die sich über Lastrollen 18 abstützen. Das Antriebsteil 12 besitzt ein angetriebenes und gelenktes Rad 20 sowie ein Bedienelement 22, mit dem Funktionen an dem Flurförderzeug ausgelöst werden können. Das Antriebsteil 12 besitzt ferner einen Fahrerstandplatz 24, der ein Bodenelement 26 mit einer Trittmatte 28 und ein mit dem Bodenelement verbundenes Wandelement 30 besitzt. Zentral an dem Wandelement 30 sind Schalthebel 32 vorgesehen, die durch eine Abdeckung 34 teilweise verdeckt sind.

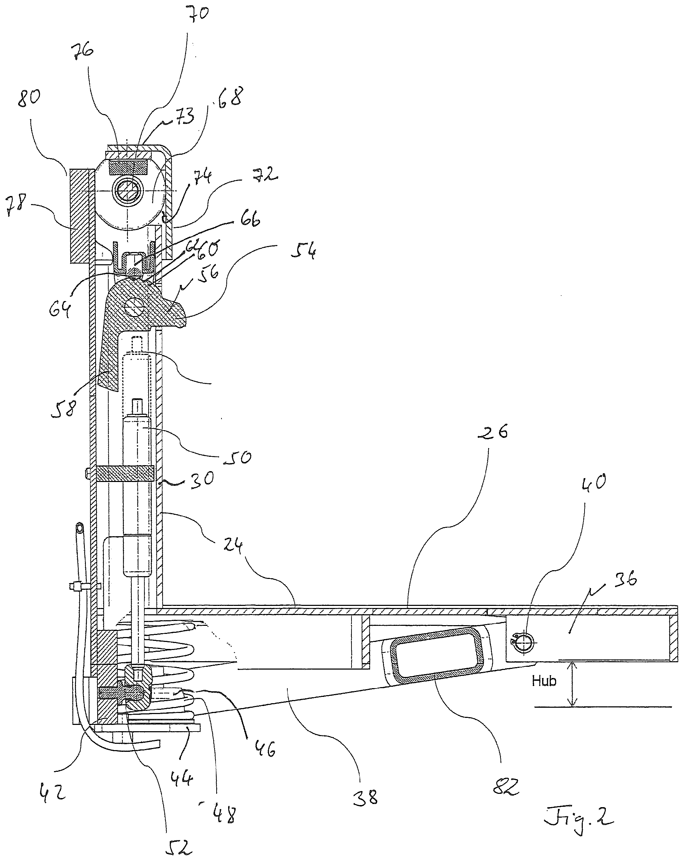

Fig. 2 zeigt in einer Schnittansicht den näheren Aufbau. Das Bodenelement 26 ist mit dem Wandelement 30 verbunden. Gemeinsam bilden Bodenelement 26 und Wandelement 30 die L-förmige Standplattform 24. Auf der Unterseite des Bodenelements 26 ist in einem Anschlussbereich 36 ein biegesteifer Arm 38 in einer Lagerstelle 40 schwenkbar angelenkt. Der weiter unten anliegenden Anlenkpunkt des Arms 38 ist in der vorliegenden Darstellung verdeckt. Zur besseren Übersicht sind Trittmatte 28 und Abdeckung 34 nicht dargestellt.

In Fig. 2 ist ebenfalls ein Ausschnitt eines Gestells 42 dargestellt, an dem ein horizontaler Flansch 44 vorgesehen ist. Der horizontale Flansch 44 trägt einen Vorsprung 46, auf dem als Federung ein Federelement 48 angeordnet ist. Das Federelement 48 stützt sich auf dem horizontalen Flansch 44 ab und liegt an der Unterseite des Bodenelements 26 an. An dem Gestell 42 ist eine Gasdruckfeder 50 über ein Kugelkopfgelenk 52 gelagert. Die Gasdruckfeder 50 bildet das erfindungsgemäß zu- und wegschaltbare Federelement. An dem Wandelement 30 ist ebenfalls ein Schalthebel 54 gelagert. Der Schalthebel 54 besitzt einen Betätigungsabschnitt 56, einen Stellarm 58 und eine Schaltfläche 60, die mit zwei Schaltvertiefungen 62 und 64 ausgebildet ist. Ein ebenfalls an dem Wandelement 30 angeordnetes Druckstück 66 greift in die Schaltvertiefungen 62, 64 ein, um die jeweiligen Schaltpositionen zu arretieren. In dem Druckstück befindet sich eine federnd gelagerte Kugel. Das Gestell kann an einem Fahrzeugrahmen montiert werden oder Bestandteil des Fahrzeugrahmens sein. Eine vertikale Flanschfläche 78 eines Gestells 80 kann beispielsweise für eine Montage an einem Fahrzeugrahmen verwendet werden.

Das von dem Bodenelement 26 fortweisende Ende des Wandelements 30 trägt eine Führungsrolle 68, die drehbar über eine Lagerachse 70 gelagert ist. Die Führungsrolle 68 liegt an einem Führungselement 72 an, wobei das Führungselement 72 eine zum Wandelement weisende Führung 74 für die Führungsrolle 68 bereitstellt. Eine obere Lasche 73 bildet einen Anschlag für die Hubbewegung und begrenzt den Weg der Führungsrolle 68.

Ein oberhalb der Führungsrolle 68 angebrachter Positionssensor 76 wirkt mit der Führungsrolle 68 bzw. ihrer Lagerachse 70 zusammen, um die in Fig. 2 dargestellte, nicht belastete Position zu erfassen.

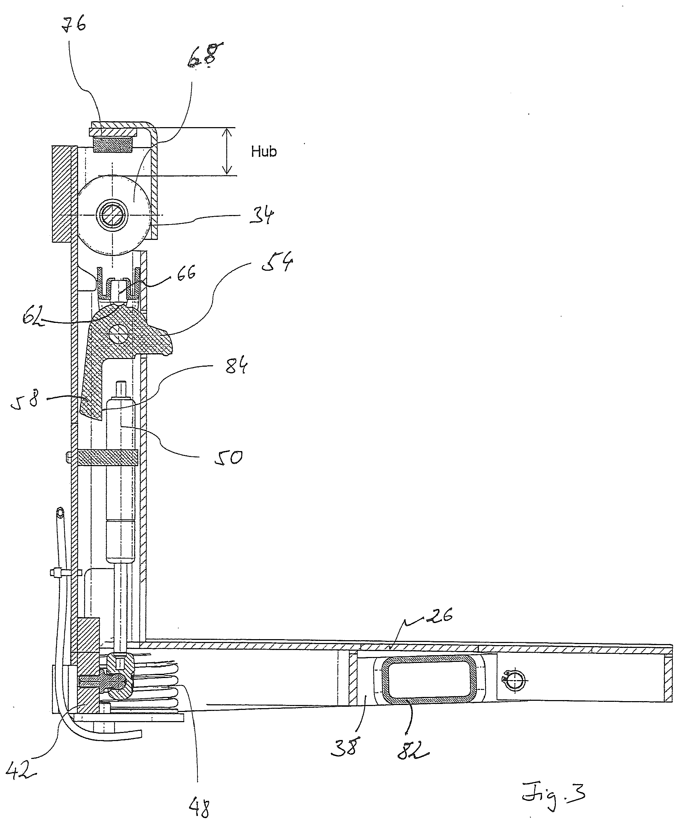

Fig. 3 zeigt die Standplattform in ihrer belasteten Position. Deutlich zu erkennen ist, dass der Arm 38 mit seinem Querarm 82 fast parallel zum Bodenelement 26 verläuft und das Federelement 48 eingedrückt ist. Auch die Rückwand hat sich in Richtung des Hubs H bewegt, so dass die Führungsrolle 68 einen Abstand von dem Positionssensor 76 besitzt. Der in Fig. 3 eingezeichnete Hub entspricht aufgrund der annähernd linearen Bewegung des Bodenelements dem Hub aus Fig. 2.

Deutlich zu erkennen in Fig. 3 ist, dass der Stellarm 58 des Schalthebels 54 sich an der Gasdruckfeder 50 vorbeibewegt, wobei ein Spalt 84 eingehalten wird. Auf diese Weise trägt die Gasdruckfeder 50 nicht zum Abfedern des Bodenelements 26 bei, sondern von den in der Schnittdarstellung aus Fig. 3 sichtbaren Federn trägt lediglich Feder 48 bei.

Fign. 2 und 3 zeigen einen Schalthebel 54, der sich in seiner zweiten Schaltstellung befindet, in der er nicht aktiv mit der Gasdruckfeder 50 zusammenwirkt.

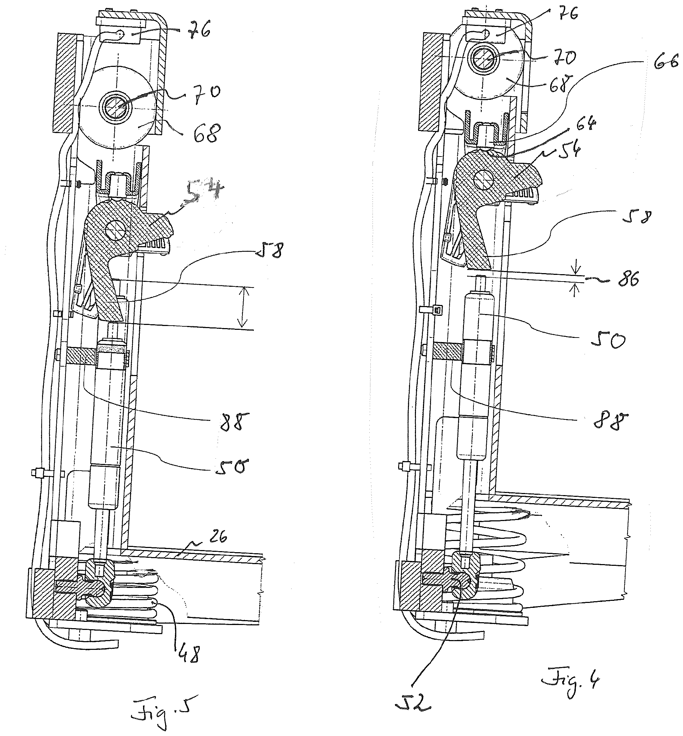

Fign. 4 und 5 zeigen den Schalthebel 54 in einer ersten Schaltstellung. Das Druckstück 66 befindet sich dabei in der ersten Schaltvertiefung 64. Im Gegensatz dazu zeigen die Fign. 2 und 3 das Druckstück 66 in seiner zweiten Schaltvertiefung 62.

Fig. 4 zeigt die nicht belastete Position, in der der Stellarm 58 oberhalb der Gasdruckfeder 50 positioniert ist, wobei ein als Leerhub bezeichneter Abstand 86 auftritt. Der Leerhub 86 erlaubt es, den Schalthebel 54 im nicht belasteten Zustand der Standplattform zu verschwenken.

Die Gasdruckfeder 50 ist in dem dargestellten Beispiel in einer Führungsleiste 88 linear verschieblich angeordnet. Ihre Anbindung erfolgt über das Kugelkopfgelenk 52. Wie in Fig. 5 gezeigt, wird durch eine Gewichtskraft auf das Bodenelement 26 sowohl das Federelement 48 als auch die Gasdruckfeder 50 komprimiert. Der mit dem Wandelement 30 mitbewegte Schalthebel 54 mit seinem Stellarm 58 führt hierbei eine Hubbewegung gegenüber der nicht komprimierten Gasdruckfeder aus.

Aus Fig. 5 ist ersichtlich, dass sich die Federkraft des Federelements 48 und der Gasdruckfeder 50 bei einer Belastung des Bodenelements 26 addieren.

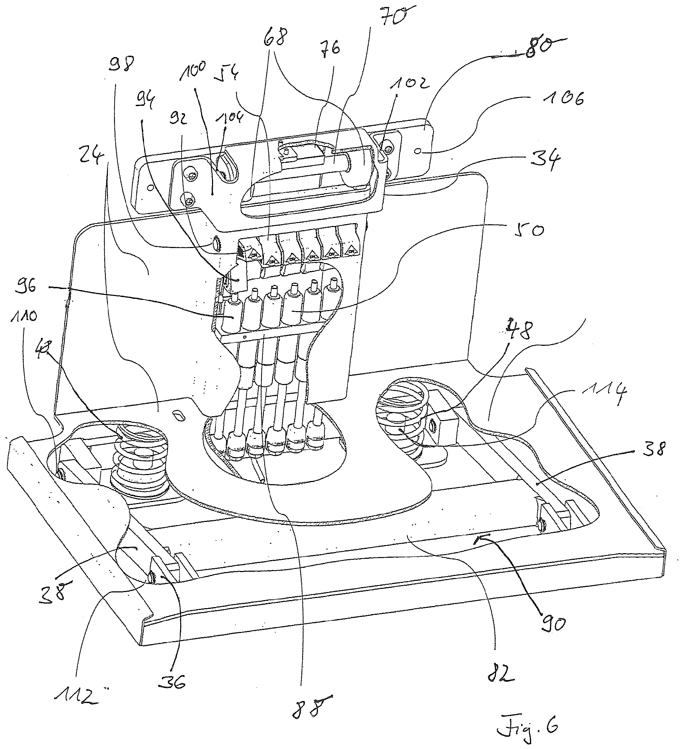

Fig. 6 zeigt die Standplattform in einer perspektivischen Ausgestaltung. Deutlich zu erkennen ist, die mit den Armen 38 ausgestattete zweiarmige Schwinge 90, die einen Querarm 82 und zwei seitliche Arme 38 besitzt. In Fig. 6 ist ebenfalls zu erkennen, dass an der Führungsleiste 88 sechs Gasdruckfedern 50 angeordnet sind. Die Gasdruckfedern 50 besitzen jeweils einen Schalthebel 54, über den diese zugeschaltet werden können. Der Schalthebel 92 befindet sich beispielsweise in seiner aktivierten, also ersten Schaltstellung, in der die Federkraft der Gasdruckfeder 96 auf die Standplattform wirkt. Die Schalthebel 54 mit dem Schalthebel 92 sind gemeinsam auf einer Lagerwelle 98 gelagert und schwenken um diese. Trittmatte 28 und Abdeckung 34 sind nicht dargestellt.

In Fig. 6 ist ferner auch das Führungselement 100 zu erkennen. Das Führungselement 100 besitzt zwei Seitenschenkel 102, 104, über die das Führungselement an dem Gestell 80 befestigt werden kann. Das Gestell 80 kann im Bereich des Führungselements über Bohrungen 106 an einem Fahrzeugrahmen festgelegt werden. In dem Führungselement 100 sind zwei Führungsrollen 68 angeordnet, die auf einer gemeinsamen Lagerachse 70 angeordnet sind. Oberhalb der Lagerachse 70 ist der Positionssensor 76 an dem Führungselement 100 montiert.

In Fig. 6 sind auch die vier Lagerstellen für die Schwinge 90 zu erkennen. Die unterhalb des Wandelements angeordnete Lagerstelle 110 befindet sich ungefähr im Bereich des Federelements 48 an dem Ende des Arms 38, das zu dem Wandelement 30 weist. Das andere Ende des Arms 38 besitzt die Lagerstelle 112, in der der Arm 38 schwenkbar mit dem Anschlussbereich 36 des Bodenelements 26 verbunden ist.

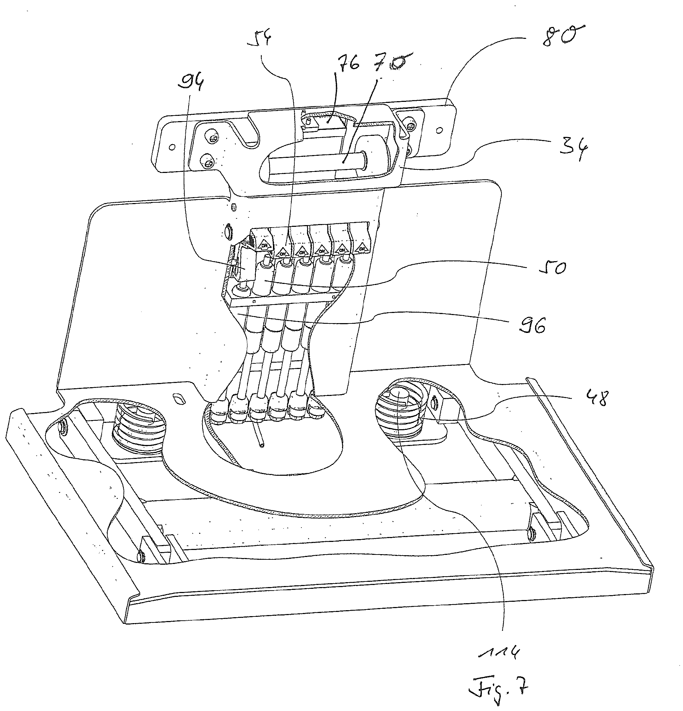

Fig. 7 zeigt die belastete Position der Standplattform aus Fig. 6. Deutlich zu erkennen ist, dass der Stellarm 94 die Gasdruckfeder 96 betätigt, während die übrigen Gasdruckfedern 50 aufgrund ihrer Stellung der Schalthebel 54 nicht betätigt sind. Das Federelement 48 ist ebenfalls komprimiert, wobei ein Pufferelement 114 sichtbar wird, das im Inneren des Federelements 48 einen Anschlag am unteren Hubende bildet und eine mögliche Überlast des Bodenelements auffängt. In Fig. 7 ist auch zu erkennen, dass der Positionssensor 76 in der belasteten Position einen größeren Abstand zur Lagerachse 70 einnimmt.

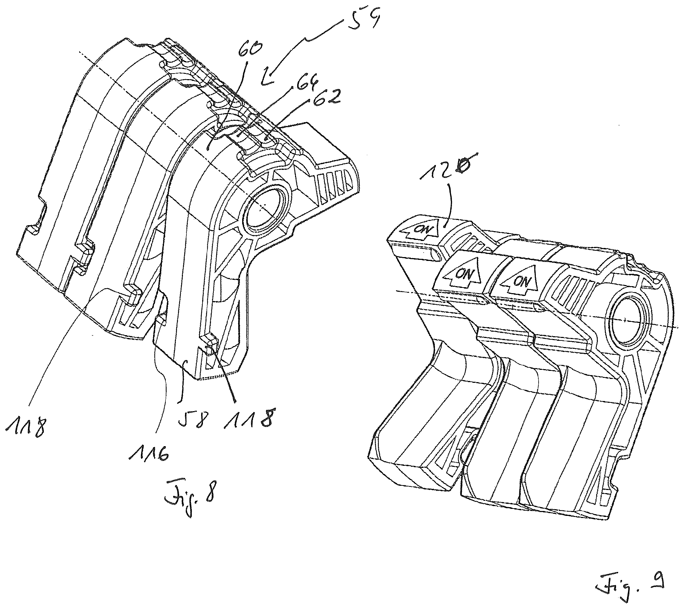

Fign. 8 und 9 zeigen drei Schalthebel 54 in einer Detailansicht. Deutlich zu erkennen sind die Schaltvertiefungen 62 und 64 entlang der Schaltfläche 60. An jedem der Stellarme 58 ist an einer Seite eine Mitnehmertasche 116 und ein Mitnahmezapfen 118 vorgesehen. Wird ein Schalthebel 54 in seine inaktive, also zweite Schaltstellung gebracht, so werden die auf der Seite der Mitnahmetasche 116 angeordneten Schalthebel ebenfalls in ihre zweite Schaltstellung gebracht. Wird ein Schalthebel in seine erste Schaltstellung, also seine aktive Schaltstellung gebracht, so werden sämtliche Hebel, die sich auf der Seite des Mitnahmezapfens befinden, mit in die erste Schaltstellung gebracht. Auf diese Weise ist es möglich, schnell und mit wenigen Handgriffen über einen Schalthebel mehrere Gasfedern zu- oder wegzuschalten.

Fig. 9 zeigt einen Blick auf die drei Schalthebel aus Fig. 8, wobei ein nach vorne stehender und für die Bedienperson zugänglicher Betätigungsabschnitt 120 zu erkennen ist. Durch eine Nach-Oben-Bewegung des Betätigungsabschnitts 120 wird der entsprechende Stellarm in seine mit dem Federelement zusammenwirkende Position gebracht.

Über das Zuschalten von einem oder mehreren Gasdruckfedern ist es möglich, einen großen Gewichtsbereich abzudecken. Es können auch für unterschiedliche Körpergewichte hierbei stets eine geeignete Stärke und/oder Anzahl von Federelementen zugeschaltet werden, damit ein entsprechender Federweg auftritt.

### Bezugszeichenliste

- 10: Flurförderzeug
- 12: Antrieb steil
- 14: Lastteil
- 16: Lastgabel
- 18: Lastrolle
- 20: Antriebsrad
- 22: Bedienelement
- 24: L-förmige Standplattform
- 26: Bodenelement
- 28: Trittmatte
- 30: Wandelement
- 32: Schalthebel
- 34: Abdeckung
- 36: Anschlussbereich
- 38: Arm
- 40: Lagerstelle
- 42: Gestell
- 44: horizontaler Flansch
- 46: Vorsprung
- 48: Federelement
- 50: Gasdruckfeder
- 52: Kugelkopfgelenk
- 54: Schalthebel
- 56: Betätigungsabschnitt
- 58: Stellarm
- 60: Schaltfläche
- 62: Schaltvertiefung
- 64: Schaltvertiefung
- 66: Druckstück
- 68: Führungsrolle
- 70: Lagerachse
- 72: Führungselement
- 73: Lasche
- 74: Führung
- 76: Positionssensor
- 78: vertikale Flanschfläche
- 80: Gestell
- 82: Querarm
- 84: Spalt
- 86: Leerhub
- 88: Führungsleiste
- 90: Schwinge
- 92: Schalthebel
- 94: Stellarm
- 96: Gasdruckfeder
- 98: Lagerwelle
- 100: Führungselement
- 102: Seitenschenkel
- 104: Seitenschenkel
- 106: Befestigungsbohrung
- 110: hintere Lagerstelle
- 112: vordere Lagerstelle
- 114: Pufferelement
- 116: Mitnehmertasche
- 118: Mitnahmezapfen
- 120: Betätigungsabschnitt

## Patentansprüche

1. Flurförderzeug mit einem Antriebsteil (12), das einen Fahrerstandplatz aufweist, der eine L-förmige Standplattform (24) mit einem horizontal angeordneten Bodenelement (26) und einem vertikal stehenden Wandelement (30) aufweist, wobei das Bodenelement (26) über eine Schwinge (90) beweglich gegenüber dem Antriebsteils (12) gelagert ist und das Wandelement (30) mindestens ein fahrzeugfest angebundenes Koppelelement aufweist, wobei ein Federelement (50) und ein an dem Wandelement (30) angeordneter Schalthebel (92) vorgesehen sind, der in einer ersten Schaltstellung mit dem Federelement (50) zusammenwirkt, **dadurch gekennzeichnet, dass** der Schalthebel (92) in seiner zweiten Schaltstellung frei gegenüber dem Federelement (50) beweglich ist, wobei in der ersten Schaltstellung eine Federkraft des Federelements (50) über den Schalthebel (54) auf die Standplattform (24) wirkt.

2. Flurförderzeug nach Anspruch 1, **dadurch gekennzeichnet, dass** die Standplattform (24) über eine Federung federnd gelagert ist.

3. Flurförderzeug nach Anspruch 1 oder 2, **dadurch gekennzeichnet, dass** als Koppelelement eine Führungsrolle (68) vorgesehen ist.

4. Flurförderzeug nach einem der Ansprüche 1 bis 3, **dadurch gekennzeichnet, dass** zwei oder mehr Schalthebel (54, 92) und jeweilige Federelement (50, 96) vorgesehen sind.

5. Flurförderzeug nach Anspruch 4, **dadurch gekennzeichnet, dass** jeder Schalthebel (54, 92) unabhängig von der Stellung der anderen Schalthebel (54, 92) in seine Schaltstellung stellbar ist.

6. Flurförderzeug nach Anspruch 1 bis 5, **dadurch gekennzeichnet, dass** einer oder mehrerer der Schalthebel (54, 92) einen Mitnehmer aufweisen, über den ein oder mehrere benachbarte Schalthebel mitgestellt werden können.

7. Flurförderzeug nach einem der Ansprüche 1 bis 6, **dadurch gekennzeichnet, dass** der Schalthebel an einem Druckstück (66) anliegt und in einer ersten Schaltstellung mit seinem Stellarm (58) an dem zugehörigen Federelement (50) anliegt, so dass bei einer federnden Bewegung der Schwinge (90) das Federelement (50) komprimiert wird.

8. Flurförderzeug nach einem der Ansprüche 1 bis 7, **dadurch gekennzeichnet, dass** als zuschaltbares Federelement (50) eine Gasdruckfeder vorgesehen ist.

9. Flurförderzeug nach einem der Ansprüche 1 bis 8, **dadurch gekennzeichnet, dass** die Schwinge (90) mindestens einen Arm aufweist, der mit einem Ende an einem fahrzeugfesten Gestell und seinem anderen Ende an dem Bodenelement angelenkt ist.

10. Flurförderzeug nach Anspruch 9, **dadurch gekennzeichnet, dass** der mindestens eine Arm (38) der Schwinge (90) an seinem von dem Wandelement fortweisenden Ende an dem Bodenelement (26) angelenkt ist.

11. Flurförderzeug nach Anspruch 9 oder 10, **dadurch gekennzeichnet, dass** die Schwinge (90) zwei über mindestens einen Querarm (82) miteinander verbundene Arme (38) besitzt.

12. Flurförderzeug nach einem der Ansprüche 3 bis 11, **dadurch gekennzeichnet, dass** ein fahrzeugfestes Führungselement (100) vorgesehen ist, das über ein Paar von Seitenschenkeln (102, 104) mit dem Fahrzeug verbunden ist und die Führung für die Führungsrolle bereitstellt.

13. Flurförderzeug nach einem der Ansprüche 1 bis 12, **dadurch gekennzeichnet, dass** ein Positionssensor (76) vorgesehen ist, der mit dem Wandelement und/oder dem Koppelelement zusammenwirkt.

14. Flurförderzeug nach Anspruch 13, **dadurch gekennzeichnet, dass** das Koppelelement unterhalb des Positionssensors angeordnet ist und sich bei unbelastetem Federelement in einer von dem Positionssensor (76) erfassbaren Position befindet.

15. Flurförderzeug nach einem der Ansprüche 13 oder 14, **dadurch gekennzeichnet, dass** der Positionssensor (76) ein Totmannsignal generiert, wenn er die Position eines unbelasteten Federelements erfasst.

16. Flurförderzeug nach einem der Ansprüche 1 bis 15, **dadurch gekennzeichnet, dass** ein zweites Federelement (48) an der zum Wandelement weisenden Seite des Bodenelements fahrzeugfest angeordnet ist und mit dem Bodenelement zusammenwirkt.

17. Flurförderzeug nach Anspruch 1 bis 16, **dadurch gekennzeichnet, dass** als Federelement (48) eine Gasdruckfeder vorgesehen ist.

## Claims

1. An industrial truck with a drive part (12), which comprises a driver standing place, which in turn comprises a L-shaped standing platform (24) with a horizontally arranged bottom element (26) and a vertically standing wall element (30), wherein the bottom element (26) is mounted movably with respect to the drive part (12) via a swing arm (90), and the wall element (30) comprises at least one vehicle-stationary tied coupling element, wherein a spring element (50) and a switching lever (92) arranged on the wall element (92) are provided, the switching lever co-operating with the spring element (50) in a first switching position, **characterised in that** the switching lever (50) is freely movable with respect to the spring element (50) in its second switching position, wherein a spring force of the spring element (50) acts on the standing platform (24) via the switching lever (54) in the first switching position.

2. The industrial truck according to claim 1, **characterised in that** the standing platform (24) is resiliently mounted via a suspension system.

3. An industrial truck according to claim 1 or 2, **characterised in that** a guide roller (68) is provided as coupling element.

4. An industrial truck according to any one of the claims 1 to 3, **characterised in that** two or more switching levers (54, 92) and respective spring elements (50, 96) are provided.

5. The industrial truck according to claim 4, **characterised in that** each individual switching lever (54, 92) can be set into its switching position irrespective of the position of the other switching levers (54, 92).

6. An industrial truck according to any one of the claims 1 to 5, **characterised in that** one or several of the switching levers (54, 92) have a towing arm via which one or several neighbouring switching levers can be set together.

7. An industrial truck according to any one of the claims 1 to 6, **characterised in that** the switching lever sits close to a pressure piece (66), and sits close to the associated spring element (50) with its control arm (58) in a first switching position, so that the spring element (50) is compressed in a springy movement of the spring arm (90).

8. An industrial truck according to any one of the claims 1 to 7, **characterised in that** a gas pressure spring is provided as connectible spring element (50).

9. An industrial truck according to any one of the claims 1 to 8, **characterised in that** the spring arm (90) comprises at least one arm which is articulated to a vehicle-stationary frame with its one end, and to the bottom element with its other end.

10. The industrial truck according to claim 9, **characterised in that** the at least one arm (38) of the spring arm (90) is articulated to the bottom element (26) with its end facing away from the wall element.

11. An industrial truck according to claim 9 or 10, **characterised in that** the spring arm (90) has two arms (38) which are connected to each other via at least one swivel arm (82).

12. An industrial truck according to any one of the claims 3 to 11, charactreised in that a vehicle-stationary guide element (100) is provided, which is connected to the vehicle via a pair of side legs (102, 104) and provides the guiding for the guide roller.

13. An industrial truck according to any one of the claims 1 to 12, **characterised in that** a position sensor (76) is provided, which co-operates with the wall element and/or with the coupling element.

14. The industrial truck according to claim 13, **characterised in that** the coupling element is arranged below the position sensor and is in a position detectable by the position sensor (76) when the spring element is not charged.

15. An industrial truck according to claim 13 or 14, **characterised in that** the position sensor (76) generates a dead man's signal when it detects the position of an uncharged spring element.

16. An industrial truck according to any one of the claims 1 to 15, **characterised in that** a second spring element (48) is vehicle-stationary arranged at the side of the bottom element facing towards the wall element and co-operates with the bottom element.

17. An industrial truck according to any one of the claims 1 to 16, **characterised in that** a gas pressure spring is provided as spring element (48).

## Revendications

1. Chariot de manutention avec une partie d'entraînement (12), qui comporte un poste de conduite, qui à son tour comporte une plate-forme d'opérateur (24) en forme de L avec un élément de sol (26) horizontalement arrangé et un élément de paroi (30) verticalement debout, l'élément de sol (26) étant monté de façon mobile par rapport à la partie d'entraînement (12) via un bras oscillant (90), et l'élément de paroi (30) comporte au moins un élément de couplage fixé de façon solidaire avec le véhicule, un élément à ressort (50) et un levier de commande (92) arrangé sur l'élément de paroi (92) étant prévus, le levier de commande co-opèrant avec l'élément à ressort (50) dans une première position de commutation, **caractérisé en ce que** le levier de commande (50) est librement mobile par rapport à l'élément à ressort (50) dans sa deuxième position de commutation, une force de ressort de l' élément à ressort (50) agissant sur la plate-forme d'opérateur (24) via le levier de commande (54) dans la première position de commutation.

2. Chariot de manutention selon la revendication 1, **caractérisé en ce que** la plate-forme d'opérateur (24) est montée de manière élastique par un système de suspension.

3. Chariot de manutention selon la revendication 1 ou 2, **caractérisé en ce que** un rouleau de guidage (68) est prévu comme élément de couplage.

4. Chariot de manutention selon l'une quelconque des revendications 1 à 3, **caractérisé en ce que** deux ou plus leviers de commande (54, 92) et des éléments à ressort (50, 96) correspondants sont prévus.

5. Chariot de manutention selon la revendication 4, **caractérisé en ce que** chaque levier de commande (54, 92) peut être mis à sa position de commutation quelle que soit la position des autres leviers de commande (54, 92).

6. Chariot de manutention selon l'une quelconque des revendications 1 à 5, **caractérisé en ce que** un ou plusieurs des leviers de commande (54, 92) comportent un entraîneur par lequel un ou plusieurs leviers de commande adjacentes peuvent être mis en position ensemble.

7. Chariot de manutention selon l'une quelconque des revendications 1 à 6, **caractérisé en ce que** le levier de commande touche une pièce de pression (66), et touche l' élément à ressort (50) associé avec son bras de réglage (58) dans une première position de commutation, de sorte que l'élément à ressort (50) est comprimé dans un mouvement élastique du bras oscillant (90).

8. Chariot de manutention selon l'une quelconque des revendications 1 à 7, **caractérisé en ce que** un ressort pneumatique est prévu comme un élément à ressort (50) pouvant être mis en connexion.

9. Chariot de manutention selon l'une quelconque des revendications 1 à 8, **caractérisé en ce que** le bras oscillant (90) comporte au moins un bras qui est articulé à un cadre fixé au véhicule par une extrémité, et à l'élément de sol par son autre extrémité.

10. Chariot de manutention selon la revendication 9, **caractérisé en ce que** l'au moins un bras (38) du bras oscillant (90) est articulé à l'élément de sol (26) par son extrémité s'éloignant de l'élément de paroi.

11. Chariot de manutention selon la revendication 9 ou 10, **caractérisé en ce que** le bras oscillant (90) a deux bras (38) reliés l'un à l'autre par au moins un bras transversal (82).

12. Chariot de manutention selon l'une quelconque des revendications 3 à 11, **caractérisé en ce que** un élément de guidage (100) fixé au véhicule est prévu qui est relié au véhicule par une paire de branches latérales (102, 104) et fournit le guidage pour le rouleau de guidage.

13. Chariot de manutention selon l'une quelconque des revendications 1 à 12, **caractérisé en ce que** un capteur de position (76) est prévu qui co-opère avec l'élément de paroi et/ou avec l'élément de couplage.

14. Chariot de manutention selon la revendication 13, **caractérisé en ce que** l'élément de couplage est arrangé au-dessous du capteur de position et se trouve dans une position pouvant être détectée par le capteur de position (76) quand l'élément à ressort n'est pas chargé.

15. Chariot de manutention selon la revendication 13 ou 14, **caractérisé en ce que** le capteur de position (76) génère un signal de l'homme mort quand il détecte la position d'un élément à ressort non chargé.

16. Chariot de manutention selon l'une quelconque des revendications 1 à 15, **caractérisé en ce que** un deuxième élément à ressort (48) fixé au véhicule est arrangé dans le coté de l'élément de sol faisant face à l'élément de paroi et co-opère avec l'élément de sol.

17. Chariot de manutention selon l'une quelconque des revendications 1 à 16, **caractérisé en ce que** un ressort pneumatique est prévu comme élément à ressort (48).
